Europäisches Patentamt

European Patent Office

Office européen des brevets

(19)

(11) Publication number: **0 398 723**
**A2**

# EUROPEAN PATENT APPLICATION

(21) Application number: **90305345.2**

(51) Int. Cl.⁵: **H02M 3/10, H02M 3/28**

(22) Date of filing: **17.05.90**

(30) Priority: **18.05.89 JP 124772/89**
**07.09.89 JP 232307/89**
**30.10.89 JP 282244/89**
**30.10.89 JP 282245/89**

(43) Date of publication of application:
**22.11.90 Bulletin 90/47**

(84) Designated Contracting States:
**DE FR GB**

(71) Applicant: **Nakano, Hirotami**
**9-25 Ooyodokita 1-Chome, Kita-ku**
**Osaka(JP)**

(72) Inventor: **Nakano, Hirotami**
**9-25 Ooyodokita 1-Chome, Kita-ku**
**Osaka(JP)**

(74) Representative: **Nash, Keith Wilfrid et al**
**KEITH W. NASH & Co. Pearl Assurance**
**House 90-92 Regent Street**
**Cambridge CB2 1DP(GB)**

(54) Switching power supply apparatus and isolating method thereof.

(57) A switching power supply apparatus includes a high frequency switching power supply circuit (1) supplied with a direct current voltage from a direct current power source (E). Switching elements (S1, S2) included in the high frequency switching power supply circuit alternately become conductive in response to a control pulse, whereby high frequency power is generated. The high frequency power is transferred through an isolation barrier (45) formed of capacitors (C1, C2) to a frequency converting circuit (7) wherein the high frequency power is frequency-converted into direct current power and then supplied to a load circuit (4). Accordingly, a conventionally used transformer is not required, so that no iron loss nor copper loss is generated in a isolation circuit (20), which allows the apparatus to be made more compact and lighter.

## FIG.2

EP 0 398 723 A2

## Switching Power Supply Apparatus and Isolating Method Thereof

## BACKGROUND OF THE INVENTION

### Field of the Invention

The present invention relates generally to switching power supply apparatuses and an isolating method thereof. More particularly, the present invention relates to a switching power supply apparatus in which a high frequency (HF) switching power supply circuit for outputting HF power above audio frequency band is connected to a load through an isolation circuit, and an isolating method thereof.

### Description of the Background Art

Conventionally, for a switching power supply apparatus using a HF switching power supply circuit, its operating frequency (switching frequency) is generally selected to be above audio frequency band, that is, above about 20kHz, in order that no harsh acoustic noise is generated. In recent years, as power solid-state devices have been greatly improved, an operating frequency is increased to several MHz. Such improvement in the operating frequency enables a switching power supply apparatus to be made more compact and lighter, which is advantageous in reducing the number of windings of a HF transformer for isolation and reducing size of magnetic and reactive components. Accordingly, technique for making an operating frequency to be higher is indispensable for making the switching power supply apparatus more compact and lighter.

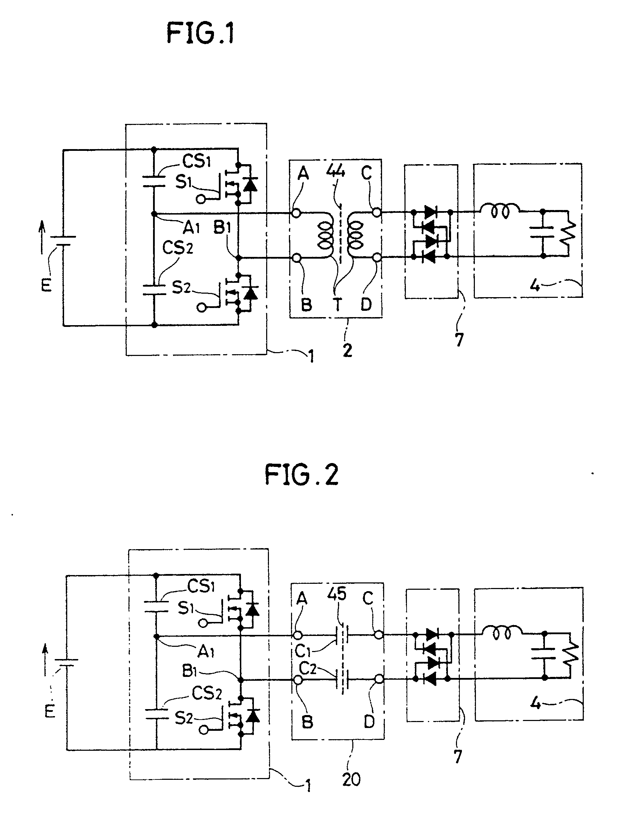

Fig. 1 is a diagram showing one example of a conventional switching power supply apparatus. Referring to Fig. 1, a direct current (DC) power supply E is connected to a HF switching power supply circuit 1. The HF switching power supply circuit 1 comprises series-connected first and second capacitors CS1 and CS2 and series-connected high speed switching elements S1 and S2 in parallel with the series-connected capacitors CS1 and CS2. Each of the switching elements S1 and S2 is comprised of a power MOSFET containing a flywheel diode. A control pulse is supplied from a control circuit (not shown) to each control terminal (gate) of the switching elements S1 and S2.

Primary side terminals A and B of an isolation circuit 2 are connected to a node A1 between the capacitors CS1 and CS2, and a node B1 between the switching elements S1 and S2 of the HF switching power supply circuit 1, respectively. The isolation circuit 2 comprises, for example, a HF transformer T. Terminals C and D on a secondary side of the isolation circuit 2 are connected to a frequency converting circuit 7 comprising a high speed diode, and then, a load circuit 4 is connected to an output side of the frequency converting circuit 7. The above described HF transformer T forms an isolation barrier 44 between the primary side terminals A and B and the secondary side terminals C and D.

Now, an operation of the conventional switching power supply apparatus shown in Fig. 1 will be described. When the control pulses are alternately supplied to the control terminals of the switching elements S1 and S2, these switching elements S1 and S2 become conductive in turn, so that a voltage applied between the primary side terminals A and B of the isolation circuit 2 is inverted in response thereto, whereby HF power is generated. The HF power is transferred to the secondary side terminals C and D through the HF transformer T of the isolation circuit 2, using a magnetic field as medium. Namely, the HF power is transferred to the side of the frequency converting circuit 7 through the isolation barrier 44 by means of the magnetic field. This HF power is frequency-converted into DC power by the frequency converting circuit 7 and then supplied to the load circuit 4.

As described in the foregoing, the isolation circuit 2 of the conventional switching power supply apparatus exclusively uses a HF transformer T. However, transformer loss is increased when the transformer is excited by the HF current. This transformer loss includes by iron loss due to magnetic materials, copper loss due to windings or the like. Such losses increased with higher frequency of operation not only reduce power conversion efficiency of the switching power supply apparatus but also present such problem as countermeasure to heat radiation for the losses or the like.

In addition, problems are pointed out concerning electromagnetic interference problems, for example, that other electronic apparatus receive obstacle noise due to radiation electromagnetic field from the HF transformer T. Therefore, in order to eliminate the obstacle noise generated from the HF transformer T, a magnetic shield is provided. However, it is generally difficult to achieve a higher shielding effect by the magnetic shield as compared with an electrostatic shield, so that originally, eliminating the radiation noise from the HF transformer T by shielding is often performed based on a kind of experimental know-how, which is one of the most difficult problems to solve.

Furthermore theoretically, a HF transformer requires such heavy members as windings made of copper wire coils and core made of magnetic material such as ferrite or cobalt amorphous, which prevent a switching power supply apparatus to be made more compact and lighter.

## SUMMARY OF THE INVENTION

Therefore, a principal object of the present invention is to provide a switching power supply apparatus in which losses can be reduced, and an isolating method thereof.

Another object of the present invention is to provide a switching power supply apparatus in which such electromagnetic interference problems can be improved as gives no obstacle radiation noise from a HF transformer to other electronic equipment, and an isolating method thereof.

A further object of the present invention is to provide a switching power supply apparatus which can be suitably made more compact and lighter, and an isolating method thereof.

Briefly stated, the present invention is a switching power supply apparatus having a HF switching power supply circuit for outputting HF power above audio frequency connected to a load through an isolation circuit comprising a pair of capacitors.

Therefore, according to the present invention, HF alternating magnetic field is extremely less likely to be generated as compared with a conventional isolation circuit formed of a magnetic material and windings, and consequently both iron loss and copper loss are hardly generated. Furthermore, it is substantially possible to avoid the necessity of winding coils for forming HF magnetic flux, and consequently HF leakage flux is hardly generated.

In accordance with a preferred embodiment of the present invention, a frequency converting circuit for frequency-converting HF power is connected between a load and an isolation circuit.

In addition, in accordance with a more preferred embodiment, a common mode choke is connected between an isolation circuit and a frequency converting circuit, or between an isolation circuit and a load.

The foregoing and other objects, features, aspects and advantages of the present invention will become more apparent from the following detailed description of the present invention when taken in conjunction with the accompanying drawings.

## BRIEF DESCRIPTION OF THE DRAWINGS

Fig. 1 is a circuit diagram showing one example of a conventional switching power supply apparatus.

Fig. 2 is an electric circuit diagram showing a first embodiment of the present invention.

Fig. 3 is an electric circuit diagram showing a second embodiment of the present invention.

Fig. 4 is an electric circuit diagram showing a third embodiment of the present invention.

Fig. 5 is an electric circuit diagram of a fourth embodiment of the present invention.

Fig. 6 is an electric circuit diagram showing a fifth embodiment of the present invention.

Fig. 7 is an electric circuit diagram showing a sixth embodiment of the present invention.

Fig. 8 is an electric circuit diagram showing a seventh embodiment of the present invention.

Fig. 9 is an electric circuit diagram showing eighth embodiment of the present invention.

Fig. 10 is an electric circuit diagram showing a ninth embodiment of the present invention.

## DESCRIPTION OF THE PREFERRED EMBODIMENTS

Fig. 2 is an electric circuit diagram showing a first embodiment of the present invention. Referring to Fig. 2, a DC power source E, a HF switching power supply circuit 1, a load circuit 4 and a frequency converting circuit 7 are similarly structured to those of Fig. 1 described above. An isolation circuit 20 comprises a pair of capacitors C1 and C2, and an isolation barrier 45 is formed between terminals A and B on a primary side and terminals C and D on a secondary side. The isolation barrier 45 causes the secondary side terminals C and D to electrically float with respect to the primary side terminals A and B. The primary side terminal A is connected to a node A1 between capacitors CS1 and CS2 in the HF switching power supply circuit 1, and the primary side terminal B is connected to a node B1 between switching elements S1 and S2. The secondary side terminals C and D are connected to the frequency converting circuit 7. Then, a HF power inputted to the primary side of the isolation circuit 20 is transferred through the isolation barrier 45 to a secondary side, using an electric field as a transfer medium. Namely, the HF power is transferred to the side of the frequency converting circuit 7 through the isolation barrier 45 by means of the electric field. This HF power is frequency-converted into DC power by the frequency converting circuit 7, and then supplied to the load circuit 4.

An operation of the embodiment shown in Fig. 2 will be described. Now, in order to supply HF power to the frequency converting circuit 7, a control pulse having, for example, a switching frequency of 400kHz is alternately applied to control terminals of the first and second switching elements S1 and S2. In response to the control pulse, the switching elements S1 and S2 alternately become conductive or on state , so that an alternating current voltage of, to some extent, approximate to or complete square wave of 400kHz is applied to the primary side terminals A and B of the isolation circuit 20.

Now, an inverter operation of the HF switching power supply 1 will be described in more detail. First, for a time period of $1\mu$sec., the control terminal of the switching element S1 is turned on and the control terminal of the switching element S2 is turned off. When an on-state of the switching element S1 and an off-state of the switching element S2 are established in response to the control pulses of the control terminals, the voltage of the capacitor CS1 is outputted between the nodes A1 and B1.

Then, when the control terminal of the switching element S1 is turned off and the control terminal of the switching element S2 is turned on, a polarity of the output voltage is inverted. However, before that, a dead time is provided for turning off all the control terminals of the switching elements S1 and S2 for 0.25 $\mu$sec. in order to prevent arm short-circuit. This is directed to preventing the switching elements S1 and S2 from being turned on simultaneously due to storage time of the switching elements S1 and S2, inspite of the existence of the signal of the control pulses of the control terminals, such that the arm short-circuit is prevented. Accordingly, during the dead time, the control terminals of all the switching elements S1 and S2 are turned off. As a matter of course, a length of this dead time should be longer than a switching time period of a switching element to be used. In case of this embodiment, a finite time length required for the switching elements S1 and S2 to enter an off-state from an on-state and vice versa, that is, a so-called a switching time is set to about $0.15\mu$sec. During the dead time, the output voltage is in a non-controlled period, and the polarity of the output voltage depends on switching characteristics of the switching elements S1 and S2 and a load current or the like, which is indefinite. This dead time is one of the causes of generation of a voltage of a low frequency component.

After the end of the dead time, for a time period of 1 $\mu$sec., the control terminal of the switching element S1 is turned off and the control terminal of the switching element S2 is turned on. When the switching element S1 is turned off and the on-state of the switching element S2 is established, the voltage of the capacitor CS2 is applied between the nodes A1 and B1, and the node A1 becomes negative with respect to the node B1. Thereafter, a dead time of $0.25\mu$sec. is again provided.

Through the repetition of the above described operations, a HF voltage of 400kHz is outputted to the nodes A1 and B1. The HF voltage is supplied to the frequency converting circuit 7 through the isolation barrier 45. And the HF power inputted to the frequency converting circuit 7 is frequency-converted into DC power by the frequency converting circuit 7. Herein, the capacitors C1 and C2 are low impedances with respect to the HF voltage of 400kHz outputted between the nodes A1 and B1, so that the provision of the capacitors C1 and C2 hardly obstructs transfer of HF power.

However, the isolation barrier 45 formed of the capacitors C1 and C2 offer substantially infinite impedance to DC. Moreover, these capacitors C1 and C2 each yield high impedances with respect to a commercial power source frequency (50Hz or 60Hz). Namely, since an impedance value of a capacitor is inversely proportional to frequency, the impedance values of the capacitors C1 and C2 become very large at 50Hz, that is, 8000 times (400 kHz/50Hz = 8000) the impedance values at 400kHz. Therefore, small amount of leak of electric energy such as a signal with respect to a low frequency can be substantially ignored in the switching power supply apparatus. Therefore, by adopting the HF operation, the isolation circuit 20 according to the present invention can be used as an isolation circuit for power of a DC power source and a commercial power source. However, if an output frequency of the HF switching power supply circuit 1 is not so high as compared with the commercial power source frequency, or if it is equal to or less than audio frequency band, for example about 400Hz, a frequency ratio of the output frequency to the commercial frequency is as low as 400Hz/50Hz = 8:1, so that the capacitors C1 and C2 forming the barrier 45 inevitably have large capacitances, whereby it is theologically difficult or impossible to use this isolation circuit as an isolation circuit for a commercial power source.

As described above, HF power is transferred easily to the frequency converting circuit 7 through the isolation barrier 45 which causes the load circuit 4 to electrically float.

On the other hand, the isolation barrier 45 hardly allows DC or low frequency power to pass therethrough.

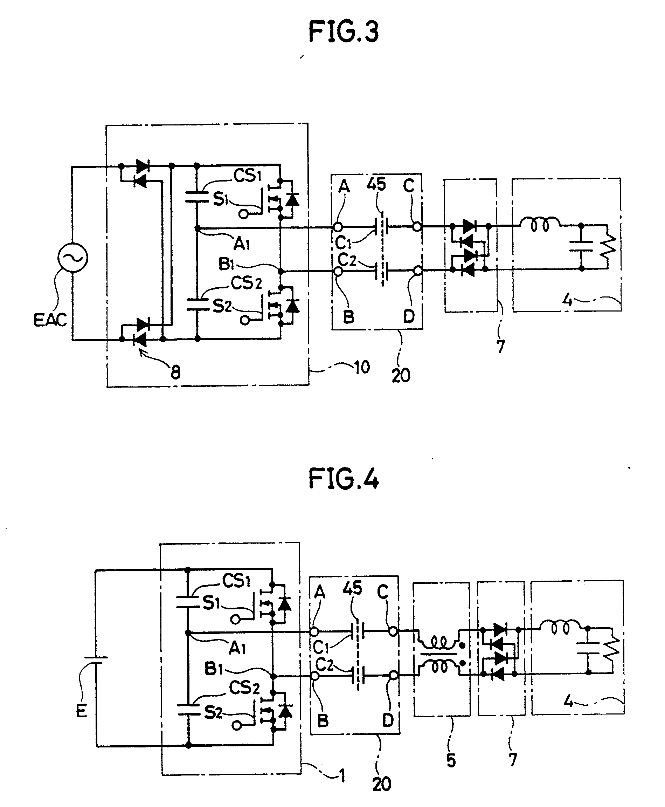

Fig. 3 is the circuit diagram showing second embodiment of the present invention. In the embodiment shown in Fig. 3, the direct power source E on the input side shown in Fig. 2 is replaced with an alternating current (AC) power source EAC on the order of the commercial frequency, and a rectifying circuit 8 for rectifying power of the AC power source EAC is provided on the input side of a HF switching power supply circuit 10, and the other parts of the structure are the same as those in Fig. 2. The operations of this embodiment are the same as those of Fig. 2 described above, except that the AC power supply EAC on the input side is full-wave rectified, and therefore no detailed description will be made.

While in the embodiment shown in Fig. 2, the HF switching power supply circuit 1 comprises the capacitors CS1 and CS2 and the switching elements S1 and S2, a HF switching power supply circuit is not limited thereto, and other HF switching power supply circuit may be used. Similarly, the frequency converting circuit 7 and the load circuit 4 are not limited to those shown in Fig. 2.

As the foregoing, according to the embodiments of the present invention, since the HF power generated in the HF switching power supply circuit is supplied to the load through the isolation circuit comprising the capacitors, there occurs little iron loss or copper loss. In addition, major loss on the isolation circuit is dielectric loss only, so that theoretically the loss can be effectively reduced, especially by using capacitors having extremely small dielectric loss tangents such as the polypropylene film capacitor. Furthermore, since no HF transformer is used, there occurs no radiation noise, whereby a desirable electromagnetic environment can be obtained. In addition, since such a heavy member as a HF transformer is not used, the apparatus can be made more compact and lighter.

Fig. 4 is the electric circuit diagram of the third embodiment of the present invention. The embodiment shown in Fig. 4 has the same structure as that of the above described embodiment of Fig. 2 except that a filter circuit 5 comprising a common mode choke is provided on the power line between the isolation circuit 20 and the frequency converting circuit 7. The filter circuit 5 is basically unnecessary in case an impedance between a ground on the input power source side and a ground on the output load side are infinite, that is, the grounds of the input/output are electrically independent from each other completely. However, if the impedance between the input and output grounds is not high with respect to the switching frequency of the HF switching power supply circuit 1, the filter circuit 5 plays an important role. For example, in case the impedance between the input and output grounds is a low impedance with respect to the switching frequency of the HF switching power supply circuit 1 and the filter circuit 5 is not provided, a large impulsive common mode current flows to the isolation circuit 20 through the input and output grounds in response to a switching operation of the HF switching power supply circuit 1. As a result, charge amounts of the capacitors C1 and C2 forming the isolation barrier abruptly fluctuate. Consequently, a large impulse current flows to the switching elements S1 and S2, resulting in the breakdown of these switching elements S1 and S2.

However, as shown in Fig. 4, the above described problem can be resolved by providing the filter circuit 5. More specifically, if an inductance value of the common mode choke forming the filter circuit 5 is a high impedance with respect to the switching operation frequency of the HF switching power supply circuit 1, the HF common mode current flowing between the input and output grounds through the isolation circuit 20 every time the HF switching power supply circuit 1 is switched, can be efficiently suppressed by the filter circuit 5.

Therefore, because of the filter circuit 5, voltages of the capacitors C1 and C2 do not abruptly fluctuate due to the HF current of the common mode, so that the voltages of the capacitors C1 and C2 forming the isolation barrier 45 are stabilized. In case the common mode choke is tight coupling perfectly, theoretically, the filter circuit 5 does not serve as an impedance in the normal mode. Namely, in the normal mode, the common mode choke is zero impedance. Therefore, basically transfer of the HF power of the normal mode outputted from the HF switching power supply circuit 1 to the frequency converting circuit 7 can not be interrupted by the filter circuit 5.

In other words, the filter circuit 5 theoretically presents zero impedance with respect to the HF voltage of the normal mode of 400kHz outputted between the nodes A1 and B1, and therefore the provision of the filter circuit 5 does not obstruct the transmission of the HF power. In addition, even if some impedance of the normal mode exists in the common mode choke, no serious problem will arise on the transfer of the HF power.

The filter circuit 5 can be connected between the direct current power supply E and the HF switching power supply circuit 1 or between the HF switching power supply circuit 1 and the isolation circuit 2 similarly to the third embodiment of Fig. 4.

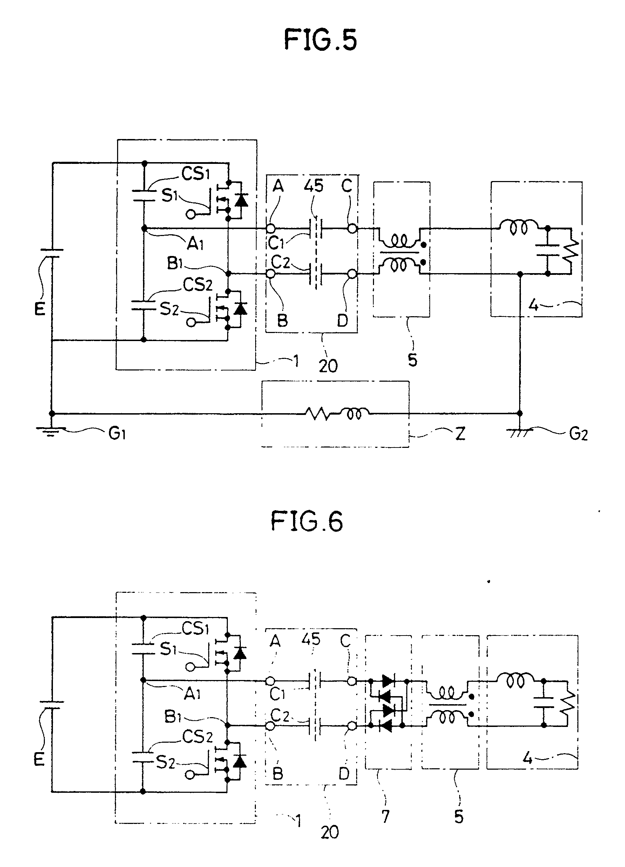

Fig. 5 is the electric circuit diagram showing the fourth embodiment of the present invention. The embodiment shown in Fig. 5 differs from that of Fig. 4 in that the frequency converting circuit 7 shown in Fig. 4 is omitted and the input power source side, that is, the direct power source E is connected to a ground G1 and the output load side, that is, the load circuit 4 is connected to a ground G2 and the grounds G1 and G2 are connected with each other through an impedance Z. In the filter circuit 5 of this embodiment, an inductance value of the common mode is a high impedance with respect to the switching frequency of the HF switching power supply circuit 1, similarly to that in Fig. 4. Thus, the voltages of the capacitors forming the isolation barrier 45 do not change abruptly in response to the switching of the HF switching power supply circuit 1, so that even if the impedance Z between the input and output grounds G1 and G2 is a low impedance or zero impedance, the HF common mode current passing through isolation barrier 45 and the impedance Z can be efficiently interrupted by the filter circuit 5. Accordingly, because of the filter circuit 5, the voltage of the capacitor C2 does not fluctuate abruptly, so that the voltages of the capacitors C1 and C2 forming the isolation barrier 45 are stabilized.

Fig. 6 is the electric circuit diagram showing the fifth embodiment of the present invention. In the embodiment shown in Fig. 6, the filter circuit 5 and the frequency converting circuit 7 are connected reversely to the embodiment shown in Fig. 4. Similarly to the embodiment shown in Fig. 4, in the filter circuit 5 of this embodiment, the inductance value of the common mode is high with respect to the switching frequency of the HF switching power supply circuit 1. As a result, the common mode current flowing through the isolation barrier 45 every time the HF switching power supply circuit 1 is switched, is efficiently interrupted by the common mode choke forming the filter circuit 5. Accordingly, because of the filter circuit 5, the voltages of the capacitors C1 and C2 do not abruptly fluctuate, so that the voltages of the capacitors C1 and C2 forming the isolation barrier 45 are stabilized.

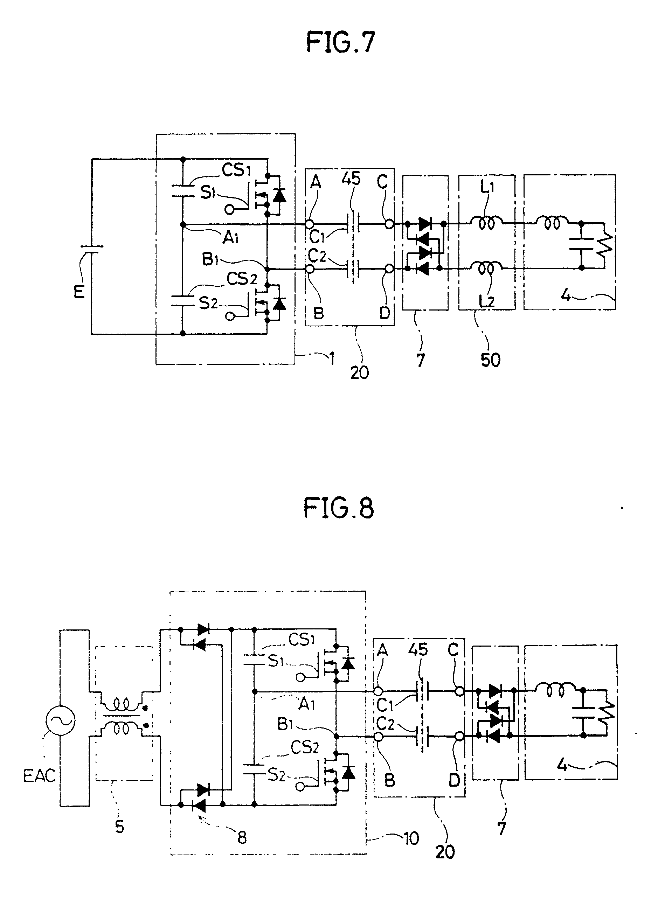

Fig. 7 is the electric circuit diagram showing the sixth embodiment of the present invention. In this embodiment shown in Fig. 7, the filter circuit 5 of Fig. 6 is replaced with a filter circuit 50 comprising reactors L1 and L2. The filter circuit 50 serves to suppress the common mode current, similarly to the filter circuit 5 of the embodiments shown in Figs. 4 through 6. Namely, if inductance values of the reactors L1 and L2 forming the filter circuit 50 are high impedance with respect to the switching operation frequency of the HF switching power supply circuit 1, the HF common mode current flowing between the input and output grounds through the isolation circuit 20 is efficiently suppressed by the filter circuit 50.

Accordingly, because of the filter circuit 50, the voltages of the capacitors C1 and C2 do not abruptly fluctuate due to the HF current of the common mode, so that the voltages of the capacitors C1 and C2 forming the isolation barrier 45 are stabilized. In addition, since the filter circuit 50 theoretically serves as an impedance in the normal mode, it also serves as a filter for smoothing the HF power of the normal mode which is outputted from the HF switching power supply circuit 1 and transferred to the frequency converting circuit 7.

Fig. 8 is the electric circuit diagram showing the seventh embodiment of the present invention. The embodiment shown in Fig. 8 differs from that of Fig. 3 in that, the filter circuit 5 comprising the common mode choke is connected on the AC power line between the AC power source EAC and the HF switching power supply circuit 10 shown in Fig. 3. Also in this embodiment, a value of the common mode choke is high impedance with respect to the switching frequency of the HF switching power supply circuit 1. As a result, the voltages of the capacitors C1 and C2 do not fluctuate abruptly, resulting in the stabilization of the voltages of the capacitors forming the isolation barrier 45. Not limited to the embodiment of Fig. 8, the circuit 5 can be connected between the HF switching power supply circuit 10 and the isolation circuit 20, or between the isolation circuit 20 and the frequency converting circuit 7, or between the frequency converting circuit 7 and the load 4.

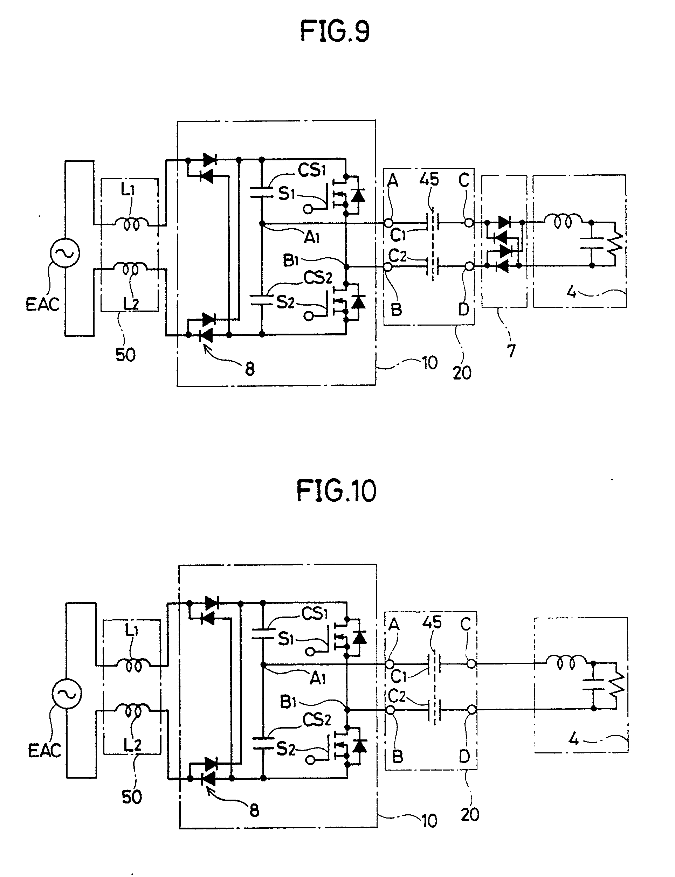

Fig. 9 is the electric circuit diagram showing the eighth embodiment of the present invention. In the embodiment shown in Fig. 9, the above described filter circuit 5 comprising the common mode choke shown in Fig. 8 is replaced with the filter circuit 50 comprising the pair of the reactors L1 and L2. This filter circuit 50 serves to suppress the common mode current, similarly to the filter circuit 5 shown in Fig. 8.

Not limited to the embodiment of Fig. 9, the circuit 50 can be connected between the frequency converting circuit 7 and the load 4.

Fig. 10 is the electric circuit diagram showing the ninth embodiment of the present invention. Structure and operation of the embodiment shown in Fig. 10 are the same as those of Fig. 9 except that the frequency converting circuit 7 shown in Fig. 9 is not provided in this embodiment, and therefore a detailed description thereof will not be made.

As the foregoing, according to the embodiments shown in Figs. 4 through 10, by connecting the filter circuit, it is possible to efficiently prevent the HF current of the common mode generated in response to the switching operation of the switching element in the switching power supply apparatus from flowing through the input and output grounds. As a result, even if the impedance between the input and output grounds is zero, that is, the input and output grounds are the same, the impedance of the filter circuit presents a high impedance with respect to the switching frequency of the HF switching power supply circuit, whereby the HF common mode current flowing through the input and output grounds can not be passed through the isolation circuit. Accordingly, because of the filter circuit, the voltages of the capacitors of the isolation circuit do not abruptly fluctuate due to the HF of the common mode current, so that the voltages of the capacitors forming the isolation barrier are stabilized. In addition, the filter circuit prevents the impulsive common mode current, so that breakdown of the switching elements can be avoided.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A switching power supply apparatus supplying power to a load connected through isolating means to an output of high frequency switching power supply means for frequency-converting power of a power source to output higher frequency power than said power of the power source, said isolating means including capacitors connected to form an isolation barrier (45) between said output of said high frequency switching power supply means and said load.

2. A switching power supply apparatus for supplying power to a load, comprising:
a direct power source (E),
high frequency switching power supply means (1) responsive to a pulse signal having a frequency above audio frequency band for outputting high frequency power based on direct current power from said direct current power source, and
isolating means (20) comprising an isolation barrier formed of capacitors connected between an output of said high frequency switching power supply means and said load.

3. A switching power supply apparatus according to claim 2, further comprising frequency converting means (7) connected between said load and said isolating means and for frequency-converting said high frequency power.

4. A switching power supply apparatus according to claim 3, further comprising filtering means (5, 50) for suppressing or interrupting a common mode current passing through said isolation barrier.

5. A switching power supply apparatus according to claim 4, wherein said filtering means comprises a common mode choke (5) for increasing a common mode impedance.

6. A switching power supply apparatus according to claim 5, wherein said common mode choke is connected between said isolating means and said frequency converting means.

7. A switching power supply apparatus according to claim 5, wherein said common mode choke is connected between said isolating means and said load.

8. A switching power supply apparatus according to claim 4, wherein said filtering means comprises a pair of reactors (50) for preventing flow of the common current.

9. A switching power supply apparatus according to claim 8, wherein said reactors are connected between said frequency converting means and said load.

10. A switching power supply apparatus for supplying power to a load, comprising:
an alternating current power source (EAC),
high frequency switching power supply means (10) responsive to a pulse signal having a frequency above audio frequency band for outputting high frequency power based on alternating current power from said alternating current power source, and
isolating means (20) including capacitors connected between an output of said high frequency switching power supply means and said load, and forming an isolation barrier.

11. A switching power supply apparatus according to claim 10, further comprising frequency converting means (7) connected between said load and said isolating means and for frequency-converting said high frequency power.

12. A switching power supply apparatus according to claim 11, further comprising filtering means (5, 50) for suppressing or interrupting a common mode current passing through said isolation barrier.

13. A switching power supply apparatus according to claim 12, wherein said filtering means comprises a common mode choke (5) for increasing a common mode impedance.

14. A switching power supply apparatus according to claim 13, wherein said common mode choke is connected between said alternating current power supply and said high frequency switching power supply means.

15. A switching power supply apparatus according to claim 12, wherein said filtering means comprises a pair of reactors (50) for suppressing flow of the common mode current.

16. A switching power supply apparatus according to claim 15, wherein said reactors are connected between said alternating current power source and said high frequency switching power supply means.

17. An isolating method of a switching power supply apparatus, comprising the steps of:
frequency-converting power from a power source into higher frequency power than said power from the power source, and
transferring said high frequency power through an isolation barrier formed of capacitors.

18. An isolating method of a switching power supply apparatus, comprising the steps of:
frequency-converting power from a power source into high frequency power above audio frequency band,
transferring said high frequency power through an isolation barrier formed of capacitors, and frequency-converting said high frequency power transferred through said isolation barrier into lower frequency power.

19. An isolating method according to claim 17 or 18, further comprising suppressing a common mode current passing through said isolation barrier.

20. An isolating method according to claim 19, wherein said step of suppressing is carried out using a common mode.

21. An isolating method according to claim 19, wherein said step of suppressing is carried out using a pair of reactors.

# FIG.1

# FIG.2

# FIG.3

# FIG.4

# FIG.5

# FIG.6

EP 0 398 723 A2

## FIG.7

## FIG.8

## FIG.9

## FIG.10